# EUROPÄISCHE PATENTSCHRIFT

(11) **EP 2 104 970 B1**
(45) Veröffentlichungstag und Bekanntmachung des Hinweises auf die Patenterteilung: **12.03.2014**
(21) Anmeldenummer: 07856554.6
(22) Anmeldetag: 11.12.2007
(51) Int. Cl.: H02G 1/08, H02G 3/04

(54) **ANORDNUNG ZUM KONFEKTIONIEREN VON SCHUTZSCHLÄUCHEN MIT DARIN EINGEBRACHTEN KABELN, LEITUNGEN, UND DERGLEICHEN**
ARRANGEMENT FOR ASSEMBLING PROTECTIVE TUBES CARRYING CABLES, WIRES, AND SIMILAR ITEMS WITHIN
DISPOSITIF POUR CONFECTIONNER DES TUYAUX DE PROTECTION AVEC DES CÂBLES, LIGNES, ET SIMILAIRES, LOGÉS À L'INTÉRIEUR

(30) Priorität: 29.12.2006 DE 102006062544
(43) Veröffentlichungstag der Anmeldung: 30.09.2009
(73) Patentinhaber: Flexa GmbH & Co. Produktion und Vertrieb KG, 63456 Hanau (DE)
(72) Erfinder: STENGER, Markus, 63456 Hanau (DE); FIEBER, Dieter, 63512 Hainburg (DE)
(74) Vertreter: Grimm, Ekkehard
(86) Internationale Anmeldenummer: PCT/EP2007/010804
(87) Internationale Veröffentlichungsnummer: WO 2008/080518

(56) Entgegenhaltungen:
- WO-A-92/10869
- DE-A1- 19 804 393
- DE-B3-102004 005 306
- DE-C1- 10 134 570

## Beschreibung

Die vorliegende Erfindung betrifft eine Anordnung zum Konfektionieren von Schutzschläuchen und darin eingebrachten Kabeln, Leitungen, und dergleichen gemäß dem Oberbegriff des Anspruchs 1.

Schutzschläuche werden in den unterschiedlichsten Bereichen eingesetzt, um beispielsweise elektrische und pneumatische Leitungen und Schläuche gegen äußere Einflüsse zu schützen. Auch werden solche Schutzschläuche eingesetzt, um mehrere Kabel oder einzelne Adern zu bündeln. Um diesen Schutzschläuchen, üblicherweise aus Kunststoff gefertigt, eine hohe Stabilität insbesondere gegen äußere Einflüsse zu verleihen und um sie gleichzeitig flexibel zu gestalten, werden diese als so genannte Wellenschläuche ausgeführt. Die Durchmesser dieser Schläuche können sehr unterschiedlich sein und reichen üblicherweise von einigen Millimetern bis zu einigen zehn Millimetern oder auch darüber.

Um Leitungen in solchen Schutzschläuchen zu verlegen, müssen diese von einem Ende aus eingezogen werden. Falls Leitungen über große Strecken in derartigen Schutzschläuchen verlegt werden sollen, wird das Einziehen der Kabel mit zunehmender Länge schwieriger, so dass es oftmals unerlässlich ist, Einziehhilfen zu verwenden, die vorab in den Schutzschlauch eingefädelt werden, um dann an dem Ende die einzuziehenden Kabel und Leitungen zu befestigen, so dass diese dann mit der Einziehhilfe durch den Schutzschlauch hindurchgezogen werden können. Falls in einen Schutzschlauch, in dem bereits Kabel eingezogen sind, weitere Kabel hinzugefügt werden sollen, wird ein solches Einziehen, auch dann, wenn eine Einziehhilfe verwendet wird, zunehmend schwieriger. Gleiches gilt auch dann, wenn Kabel bereits verlegt sind, etwa in dem Bereich eines Computerarbeitsplatzes, die nachträglich in einem Schutzschlauch zusammengefasst werden sollen. Auch aus diesem Grund werden Schutzschläuche angeboten, die in Längsrichtung geschlitzt sind, so dass diese Schutzschläuche geöffnet werden können, um dann die Kabel einzulegen. Meist sind die Kanten des Schutzschlauches entlang des Schlitzes scharfkantig, so dass diese scharfen Kanten zu Verletzungen führen können, wenn die Kanten mit der bloßen Hand geöffnet werden. Auch stehen die Kanten unter einer solchen Spannung, dass ein Öffnen des Schlauchs entlang des Längsschlitzes schwierig ist. Ein weiteres Problem solcher geschlitzten Schutzschläuche zeigt sich darin, dass sich die Kanten nach einem Öffnen des Schlauches nicht immer exakt in einer Ebene ausgerichtet aneinander legen; es kann beispielsweise auftreten, dass sich die eine Längskante über die andere Längskante schiebt, so dass sich auch der Durchmesser des Schlauchs verringert. Auch wird das äußere Erscheinungsbild gestört, beispielsweise dann, wenn solche Schutzschläuche in sichtbaren Bereichen eingesetzt werden, beispielsweise um an einem Arbeitsplatz die Kabel eines PCs zu bündeln.

Die DE 20 2004 009 048 U1 beschreibt ein einfaches, axial geschlitztes Wellenrohr aus Kunststoff für die Aufnahme von Kabeln, Adern, Metallleitungen, und dergleichen, bei dem der Schlitz wellenförmig ausgeführt ist. Diese wellenförmige Ausbildung des Schlitzes soll dazu führen, dass die Kabel oder Adern in Biegungen wesentlich besser in dem Wellenrohr gehalten werden.

Ein Kabelschutzschlauch bzw. ein Kabelschutzgehäuse in Form eines langen Kunststoffrohrs ist in der DE 200 13 481 U1 beschrieben Bei diesem Schutzschlauch legen sich die Bereiche der freien Kanten übereinander, so dass der Schutzschlauch im Bereich des Schlitzes ohne Belassen eines freien Spalts geschlossen ist.

Die DE 10 2004 005 310 B4 beschreibt ein Wellenrohr als Schutzummantelung von elektrischen Kabeln in Kraftfahrzeugen. Dieses Wellenrohr weist einen über seine Länge durchgehend verlaufenden Schlitz sowie diesen verschließende Verschlussmittel auf. Die Verschlussmittel sind hakenförmige Vorsprünge an dem einen Rand entlang des Schlitzes, die in passende Vorsprünge an dem anderen Rand des Schlitzes eingreifen, indem sie die jeweiligen anderen Vorsprünge übergreifen oder sich darunter legen. Um den Schlauch entlang des Schlitzes zu verschließen, stellt das Verhaken der Vorsprünge einen aufwändigen Arbeitsvorgang dar.

Die DE 696 22 048 T2 (Übersetzung der EP 0 883 922 B1) beschreibt ein geschlitztes Wellrohr, bei dem entlang des Schlitzes an einer Längskante eine Zunge oder Lasche vorgesehen ist, die sich unter den Rand der anderen Längskante des Wellrohrs schiebt, so dass die Lage und Orientierung der beiden Längskanten zueinander festgelegt ist. Auch wird in diesem Dokument ein Verfahren zur Herstellung eines solchen Wellrohrs durch Extrudieren mittels Ketten- bzw. Bandextrudierern angegeben.

Da es, wie vorstehend bereits beschrieben ist, schwierig ist, einen geschlitzten Schutzschlauch zu öffnen, um darin Kabel einzulegen, gibt die vorstehend bereits angeführte DE 200 13 481 U1 ein Hilfswerkzeug, als Einführklammer bezeichnet, an. Diese Einführklammer umfasst zwei Formteile, jeweils bestehend aus einer Klammerhalterung und einem Klammerkörper, die durch eine Klammerfeder so gehalten sind, dass ein Kabelführungszylinder gegen den Druck der Klammerfeder geöffnet werden kann, um Kabel in den Kabelführungszylinder einzulegen, und durch den Druck der Klammerfeder wieder geschlossen wird und auch geschlossen gehalten wird. Weiterhin ist ein Führungsteil, bezeichnet als Gehäusekopf, vorgesehen, der sich an die Klammerkörper anschließt, wobei zwischen Klammerkörper und Gehäuseführungskopf beidseitig eine Einschnürungslinie gebildet sind, entlang denen die beiden Kanten des Kabelschutzgehäuses gespreizt werden; der Gehäuseführungskopf läuft dabei durch den Innenraum des Kabelschutzgehäuses und dient als Führungsteil. Gleichzeitig mit dem Verschieben dieses Hilfswerkzeugs entlang des Schlitzes können über den Kabelführungszylinder Kabel in den Innenraum des Kabelschutzgehäuses eingelegt werden. Hinter der Einführklammer kann sich das Kabelschutzgehäuse wieder verschließen. Die Handhabung dieser Einführklammer ist insofern problematisch, dass nicht immer eine exakte Führung gewährleistet ist, und es kann auftreten, dass die Einführklammer aus dem Schlitz herausspringt; dies kann insbesondere dann der Fall sein, wenn stärkere Kabel in das Kabelschutzgehäuse eingelegt werden sollen. Weiterhin ist bei diesem System das Problem vorhanden, dass sich die Kanten entlang des Schlitzes des Kabelschutzgehäuses in dessen verschlossener Stellung übereinander legen, wodurch sich unterschiedliche Durchmesser des Kabelschutzgehäuses ergeben können, die unter anderem von dem eingesetzten Kunststoffmaterial, dem Alter des Kabelschutzgehäuses und der Menge der eingelegten Kabel abhängen.

Weiterhin beschreibt die WO 92/10869A eine Anordnung zum Bestücken eines Kabelschutzrohrs mit einem Kabel und zum gleichzeitigen Verlegen des mit einem Kabel bestückten Kabelschutzrohrs im Erdboden, wobei diese Anordnung die Merkmale des Oberbegriffs des Anspruchs 1 aufweist. Diese Anordnung umfasst eine Vorrichtung zum laufenden Einbringen des oder der Kabel in ein zumindest einseitig offenes Schutzrohr, wobei das Schutzrohr dann, bevor es in dem Erdboden verlegt wird, an seinen aneinander gegenüber liegenden Randbereichen mit über die gesamte Schutzrohrlänge verlaufenden Verrastungselementen verschlossen wird.

Die DE 198 04 393 A1 beschreibt ein Verfahren sowie ein Einfädelwerkzeug zum Einfädeln von Lichtwellenleitern in einen mit einem Längsschlitz versehenen Schutzschlauch.

Die DE 10 2004 005 306 B3 beschreibt ein Werkzeug zum Einbringen eines strangförmigen Verschlussmittels in einen Schlitz eines Schlauches oder Rohres, insbesondere eines Wellenrohres. Mit dem Werkzeug wird der Schlitz des Rohres aufgeweitet und gleichzeitig ein Verschlusselement in den Schlitz eingeführt, das in Längsrichtung Laschen aufweist, die sich entlang der Schlitzkanten an die Oberseite und die Unterseite des Schlauchs anlegen.

Die DE 101 34 570 C1 beschreibt eine Vorrichtung zum Einbringen eines Leiters in einen geschlitzten Wellenschlauch; die Vorrichtung umfasst einen Grundkörper, der in den Schlitz des Schlauchs eingebracht wird, um diesen zu öffnen und damit das Wellenrohr aufzuweiten. Aufgrund seiner Elastizität schließt sich der Schlauch wieder, nachdem der Leiter eingebracht ist.

Der vorliegenden Erfindung liegt nun die Aufgabe zugrunde, eine Anordnung zum Konfektionieren von Schutzschläuchen mit darin eingebrachten Kabeln, Leitungen, und derglei-chen, zu schaffen, mit dem dieser Vorgang zeitsparend auch unmittelbar auf einer Baustelle durchgeführt werden kann.

Gelöst wird diese Aufgabe durch eine Anordnung zum Konfektionieren von Schutzschläuchen und darin eingebrachten Kabeln, Leitungen, und dergleichen, mit den Merkmalen des Anspruchs 1.

Es ist oftmals erforderlich, dass Leitungen und Kabel über große Strecken in Schutzschläuchen verlegt werden müssen. Um das Einbringen dieser Leitungen und Kabel zu erleichtern, kann vor Ort eine solche Anordnung mit einem Vorrat eines Schutzschlauchs, entsprechenden Vorräten an Kabeln und/oder Leitungen und mit einem Hilfswerkzeug, das die zentrale Einheit dieser Anordnung bildet, eingesetzt werden. Die Anordnung ist leicht transportabel und kann unmittelbar an dem Ort, an dem Kabel, Leitungen, und dergleichen, verlegt werden sollen, aufgestellt werden, um die Schutzschläuche mit darin eingebrachten Kabeln und Leitungen zu konfektionieren und in der erforderlichen Länge bereitzustetten. An der Arbeitsplattform sind Führungsteile angeordnet, um den Schutzschlauch zu dem Hilfswerkzeug zuzuführen und von diesem wegzuführen. Nachdem die erforderliche Länge der Leitungen und Kabel in den Schutzschlauch eingeführt ist und der Schutzschlauch mit dem Profilteil verschlossen ist, wird diese konfektionierte Schlauchlänge abgeschnitten, und das nächste Teil wird konfektioniert. Zum Abschneiden der konfektionierten Schlauchlänge kann eine Schneideinrichtung vorgesehen sein, die ebenso an der Arbeitsplattform montiert ist; für die Bestimmung der Länge des Schutzschlauchs kann ein entsprechendes Zählwerk vorgesehen werden.

Die Vorratseinheiten können so übereinander angeordnet sein, dass die Kabel, Leitungen, und dergleichen, oberhalb des Schutzschlauchs zugeführt werden und das Profilteil oberhalb der Kabel, Leitungen, und dergleichen, zugeführt wird.

Die Vorratseinheiten können durch Vorratsrollen gebildet werden.

Um den konfektionierten Schutzschlauch für das Verlegen bereitzustellen, kann auslaufseitig der Arbeitsplattform eine Aufnahmerolle für den Schutzschlauch mit den eingezogenen Kabeln, Leitungen und dergleichen angeordnet werden, auf die der Schutzschlauch, fertig konfektioniert, aufgewickelt wird.

Die Vorratseinheiten und/oder Vorratsrollen können in Gestellen gehalten werden.

Wesentlich ist, dass die Anordnung dazu dient, in Längsrichtung geschlitzte Schutzschläuche zu verwenden, um über diesen Schlitz die Kabel und Leitungen in den Schutzschlauch einzubringen. Da der Schutzschlauch die Kabel und Leitungen gegen äußere Einflüsse, insbesondere gegen mechanische Einwirkungen, schützen soll, wird der Schlitz des Schutzschlauchs anschließend durch ein Verschlusselement verschlossen.

Um auch die Möglichkeit zu bieten, einen ungeschlitzten Schutzschlauch als Ausgangsmaterial einzusetzen, kann eingangsseitig des Hilfswerkzeugs eine Schlitzeinrichtung vorgesehen werden, mit der der ungeschlitzte Schutzschlauch, bevor er dem Hilfswerkzeug zugeführt wird, in Längsrichtung geschlitzt wird. Als Schlitzeinrichtung kann ein feststehendes Messer eingesetzt werden, das beispielsweise auf der Arbeitsplattform befestigt ist, auf der auch das Hilfswerkzeug montiert ist.

In einer Ausführungsform wird der Schutzschlauch entlang des Schlitzes durch ein Profilteil verschlossen, das sich zwischen die Längskanten des Schlauchs entlang des Schlitzes einlegt. Mit diesem Profilteil werden die Längskanten in ihrer Orientierung zueinander fixiert. Ein solches Profilteil kann für Schutzschläuche unterschiedlicher Durchmesser, die in Längsrichtung geschlitzt sind, verwendet werden; auch kann ein solches Profilteil als endloses Teil hergestellt werden, um es dann auf die jeweils erforderliche Länge abzulängen.

Ein solches Verschlusselement bzw. Profilteil kann im Querschnitt gesehen in der Form eines doppelten "U" oder eines doppelten "T" ausgeführt sein. Ein mittlerer Steg dieses Profils legt sich zwischen den Längskanten ein und die Oberseite des Schlauchs wird entlang der Längskanten durch jeweilige Flächenelemente des Profils überdeckt und ebenso wird die Innenseite des Schlauchs entlang der Längskanten auch durch jeweilige Flächenelemente des Profils unterlegt. Auch kann das Verschlusselement bzw. Profilteil im Querschnitt gesehen durch zwei runde Teile, die über einen Steg miteinander verbunden sind, ausgeführt sein. Der Steg dieses Profils legt sich dann zwischen den Längskanten des Schutzschlauchs ein, die Oberseite des Schlauchs entlang der Längskanten wird durch den einen Wulst des Profils überdeckt und die Innenseite des Schlauchs entlang der Längskanten wird durch den anderen Wulst des Profils unterlegt. Ein solches Profilteil ist auch dazu geeignet, für in Längsrichtung geschlitzte Schutzschläuche, insbesondere für Wellenschläuche, unterschiedlicher Durchmesser eingesetzt zu werden.

Um ein solches Profilteil variabel einsetzbar zu gestalten, das heißt insbesondere für den Einsatz von Schutzschläuchen unterschiedlicher Durchmesser, sollten die an der Innenseite des Schutzschlauchs anliegenden freien Schenkel des Profilteils, beispielsweise dann, wenn das Profilteil bzw. Verschlusselement im Querschnitt gesehen als doppeltes "U" oder doppeltes "T" ausgeführt ist, eine Krümmung mit einem Krümmungsradius aufweisen, der kleiner ist als der Krümmungsradius der Innenseite des Schutzschlauchs. Dagegen können die an der Außenseite des Schutzschlauchs liegenden freien Schenkel des Profilteils als gerade Flächenteile ausgebildet sein. Damit die an der Außenseite des Schutzschlauchs liegenden freien Schenkel im Wesentlichen flächig an dem Schutzschlauch anliegen, können die freien Schenkel des Profilteils eine Krümmung mit einem Krümmungsradius aufweisen, der etwa dem Krümmungsradius der Außenseite des Schutzschlauchs entspricht. Es ist verständlich, dass auch die freien Schenkel des Profilteils, die sich im Bereich der Außenseite des Schutzschlauchs befinden, in ihrer Krümmung der Außenseite des Schutzschlauchs angepasst werden können, so dass sie sich flächig an die Außenseite anlegen.

Das Verschlusselement kann auch durch einen Verschluss-Schutzschlauch gebildet werden, der in Längsrichtung einen Schlitz aufweist, so dass dieser Verschluss-Schutzschlauch über den Schutzschlauch, nachdem die Kabel in diesen Schutzschlauch eingebracht sind, geschoben werden kann, um den Schlitz des Schutzschlauchs zu verschließen. Bei einem solchen Verschluss-Schutzschlauch können die Längskanten mit einem Abstand beabstandet sein, der etwas geringer als der Durchmesser des Schutzschlauchs ist, so dass dieser Verschluss-Schutzschlauch leicht über den Schutzschlauch gestülpt werden kann, aber dennoch mit einer ausreichenden Klemmkraft daran gehalten wird.

Das Verschlusselement kann aus einem eingefärbten Kunststoffmaterial gefertigt werden, das in der Farbe der Farbe des Schutzschlauchs angepasst ist, so dass sich dieses Verschlusselement unauffällig in den Schutzschlauch integriert. Um allerdings das Verschlusselement variabel für die unterschiedlichen farblichen Varianten von Schutzschläuchen zu gestalten, ist ein farbloses, flexibles Kunststoffmaterial bevorzugt, so dass die Farben des Schutzschlauchs durch die Teile des Profilelements zu sehen sind und somit das Profilelement die Farbe des Schutzschlauchs quasi aufnimmt. Um das Profilelement flexibel auszubilden, damit es sich gut in den Schlitz zwischen den Längskanten des Schutzschlauchs einpasst, sollte das Verschlusselement aus Polyurethan (PU), Polypropylen (PP), Polyamid (PA), Polyethylen (PE) oder auch Polyvinylchlorid (PVC) gebildet werden.

Das Hilfswerkzeug, das an der Arbeitsplattform feststehend montiert ist, kann geeignet so aufgebaut werden, um zum einen das vorstehend erläuterte Verschlusselement bzw. Profilelement zwischen die Längskanten des geschlitzten Schutzschlauchs einzulegen und zum anderen gleichzeitig auch Kabel, Leitungen, und dergleichen, in den Schutzschlauch einzuführen. Wesentlich bei diesem Hilfswerkzeug sind die Führungsteile an der Außenseite der Teilkörper, die den Schutzschlauch beim Verschieben entlang des Hilfswerkzeugs im Bereich seines Längsschlitzes führen und gleichzeitig spreizen, so dass in den Schutzschlauch die Kabel und Leitungen eingeführt werden können. Darüber hinaus wird im Bereich des Hilfswerkzeugs, entweder unmittelbar durch dieses, oder durch ein weiteres Werkzeug, beispielsweise ein Klemmwerkzeug, das Verschlusselement angebracht, um den Schutzschlauch, bei dem es sich um einen Wellenschlauch handeln kann, entlang des Schlitzes zu verschließen.

In einer bevorzugten Ausführungsform weist das Hilfswerkzeug zwei Teilkörper auf, die an ihrer einen Längsseite verbunden sind und zwischen denen ein Hohlraum oder Zwischenraum, zum Führen von Kabeln, Leitungen, und dergleichen, gebildet ist. Auf den Außenflächen der Teilkörper sind Führungsteile vorgesehen, entlang derer der dem Hilfswerkzeug zugeführte Schutzschlauch geführt wird, hindurchgeschoben wird und/oder hindurchgezogen wird.

In einer Ausführungsform können in dem Hilfswerkzeug Führungselemente im Bereich des Hohlraums zwischen den Teilkörpern vorgesehen werden, die dazu dienen, das Verbindungselement bzw. Profilteil zwischen die Längskanten des Wellenschlauchs zu führen und dort genau einzulegen. Schließlich wird der Hohlraum in dem Hilfswerkzeug dazu verwendet, Kabel in den Innenraum des Schutzschlauchs einzuführen.

Um das Hilfswerkzeug öffnen zu können, um darin einen Schutzschlauch und/oder Leitungen und/oder Kabel zu Beginn des Konfektionierungsvorgangs einzulegen, können die zwei Teilkörper mit einem Scharnierteil verbunden werden.

Die Führungsteile können an den freien, dem Scharnierteil gegenüberliegenden Längskanten angeordnet sein, und im Bereich des Hohlraums zwischen den Teilkörpern können Führungselemente angeordnet sein, die, in einer Projektion auf die Außenseite der Teilkörper gesehen, von dem einen Ende der Teilkörper aus unter einem Winkel zu den Führungsteilen auf der Außenseite der Teilkörper verlaufen und etwa in der Ebene dieser Führungsteile an dem anderen Ende der Teilkörper enden. Damit kann sichergestellt werden, dass ein Verschlusselement genau in die Ebene zwischen die Längskanten des geschlitzten Schutzschlauchs einlaufen.

Die Teilkörper können in Draufsicht eine dreieckförmige oder trapezförmige Form aufweisen. Das spitz zulaufende Ende ist der Bereich, an dem das Hilfswerkzeug zwischen die Längskanten des Schutzschlauchs einläuft bzw. eingefädelt wird, während die gegenüberliegende Seite ausreichenden Raum bietet, um die Kabel und das Profilteil, voreinander beabstandet, zuzuführen. An dem spitz zulaufenden Ende der Teilkörper sollten die Führungsteile und die Führungselemente in einer Ebene enden.

Bevorzugt werden die Führungsteile und/oder Führungselemente durch Stege gebildet.

Mindestens zwei Stege jedes Führungsteils können jeweils so angeordnet sein, dass eine U-förmige Rinne gebildet wird.

Um die Kanten des Schutzschlauchs, beispielsweise eines Wellenschlauchs, über das gesamte Hilfswerkzeug zu führen, sollten sich die Führungsteile von dem einen Ende bis zu dem anderen Ende der Teilkörper erstrecken.

Wie bereits erwähnt, sind die Führungselemente im Bereich des Hohlraums zum Führen eines zwischen die Längskanten des Schutzschlauches einzulegenden Verschlusselements (Keder) ausgebildet, das heißt sie sind der Profilierung des Verschlusselements angepasst.

Um einen passenden Abstand der zwei Teilkörper sicherzustellen, ist jeweils ein Steg auf der Innenseite jedes Teilkörpers angeordnet, der eine solche Höhe aufweist, dass die freien Kanten der gegenüberliegenden Stege aneinander stoßen.

Weiterhin kann ein auf der Innenseite jedes Teilkörpers angeordneter Steg eine solche Höhe aufweisen, dass zwischen den freien Kanten der gegenüberliegenden Stege ein Zwischenraum gebildet ist; zwischen diesen beiden Stegen bzw. in dem Zwischenraum kann dann ein entsprechendes Verschlusselement bzw. Profilteil geführt werden.

Um die Reibung zwischen dem Hilfswerkzeug und den Längskanten des Schutzschlauchs gering zu halten, sollte die Bodenfläche der U-förmigen Rinne auf der Außenseite der Teilkörper, in der die Längskante des Schutzschlauchs läuft, wellenartige Vorsprünge aufweisen.

Das die beiden Teilkörper verbindende Scharnier kann, wenn das Hilfswerkzeug aus einem Kunststoffmaterial gefertigt ist, bevorzugt als Filmscharnier ausgebildet sein; entlang dieses Scharniers können die beiden Teilkörper, wie erwähnt, aufgeklappt werden. Das Scharnier kann als doppeltes Filmscharnier ausgebildet sein.

Weitere Einzelheiten und Merkmale der vorliegenden Erfindung ergeben sich aus der nachfolgenden Beschreibung eines Ausführungsbeispiels anhand der Zeichnung. In der Zeichnung zeigt
- Figur 1: eine seitliche Ansicht einer schematisch dargestellen Anordnung, um halb automatisiert Kabel, Leitungen, und dergleichen, in Schutzschläuche, einzuziehen, wobei ein Detail "A" vergrößert eine Anordnung zum Schlitzen eines ungeschlitzten Schutzschlauchs darstellt,
- Figur 2: die Anordnung der Figur 1, allerdings ohne die Abdeckhaube, die in Figur 1 zu sehen ist, so dass das eingesetzte Hilfswerkzeug sichtbar ist, ebenfalls mit dem Detail "A",
- Figur 3: eine perspektivische Ansicht eines Abschnitts eines Wellenschlauchs, der in Längsrichtung geschlitzt ist, mit einem Hilfswerkzeug, mit dem gerade ein Profilteil in den Längsschlitz eingesetzt wird, so wie dieser Vorgang in der Anordnung der Figuren 1 und 2 erfolgt,
- Figur 4: die Ansicht der Figur 3, allerdings von der anderen Seite des Hilfswerkzeugs aus gesehen,
- Figur 5A: eine perspektivische Ansicht des Hilfswerkzeugs, wie sie in den Figuren 3 und 4 zu sehen ist, von der Einführseite aus,
- Figur 5B: eine perspektivische Ansicht einer weiteren Ausführungsform eines Hilfswerkzeugs von der Einführseite aus,
- Figur 6: das Hilfswerkzeug, wie es in den Figuren 3, 4 und 5A zu sehen ist, in einer perspektivischen Ansicht in einem aufgeklappten Zustand mit Sicht auf die Außenseite,
- Figur 7A: das Hilfswerkzeug, wie es in Figur 5B zu sehen ist, in einer perspektivischen Ansicht in einem aufgeklappten Zustand mit Sicht auf die Außenseite,
- Figur 7B: das Hilfswerkzeug der Figur 5B in einem aufgeklappten Zustand entsprechend Figur 7A, allerdings mit Sicht auf die Innenseite,
- Figur 8: drei verschiedene Profilteile, bezeichnet mit A, B und C, wie sie zum Verschließen des Schutzschlauchs eingesetzt werden können, wobei das Profilteil A demjenigen entspricht, das in den Figuren 3 und 4 zu sehen ist,
- Figur 9: ein weiteres Hifswerkzeug, das im Bereich der Scharnierteile so profiliert ist, um dort entlang einen Verschluss-Schutzschlauch zu führen, und
- Figur 10: eine perspektivische Darstellung, die den Einsatz eines Hilfswerkzeugs darstellt, wie es in Figur 9 gezeigt ist, mit einem zusätzlichen Klemmwerkzeug.

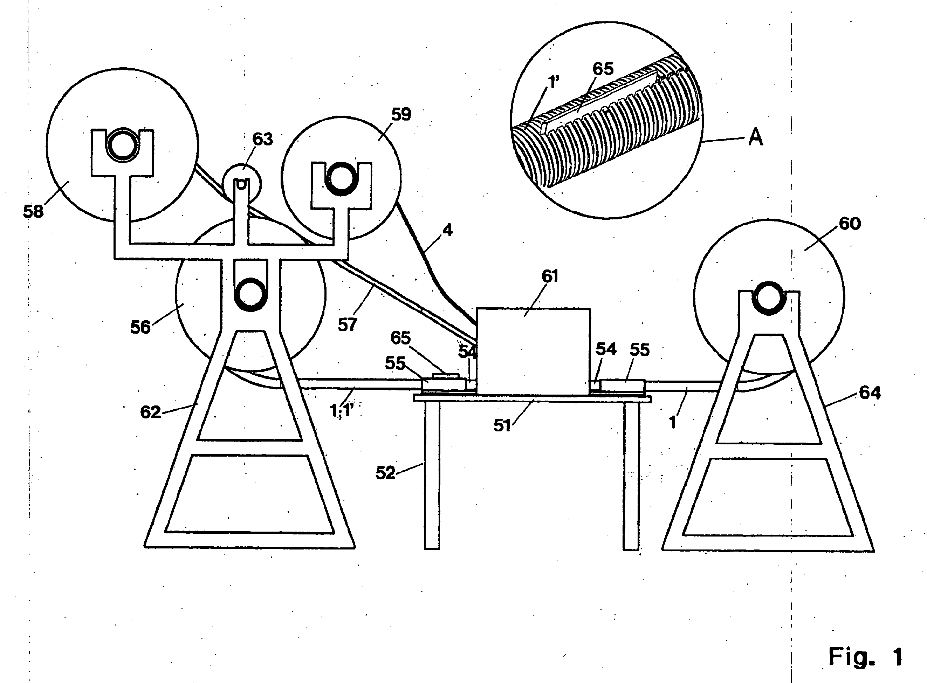

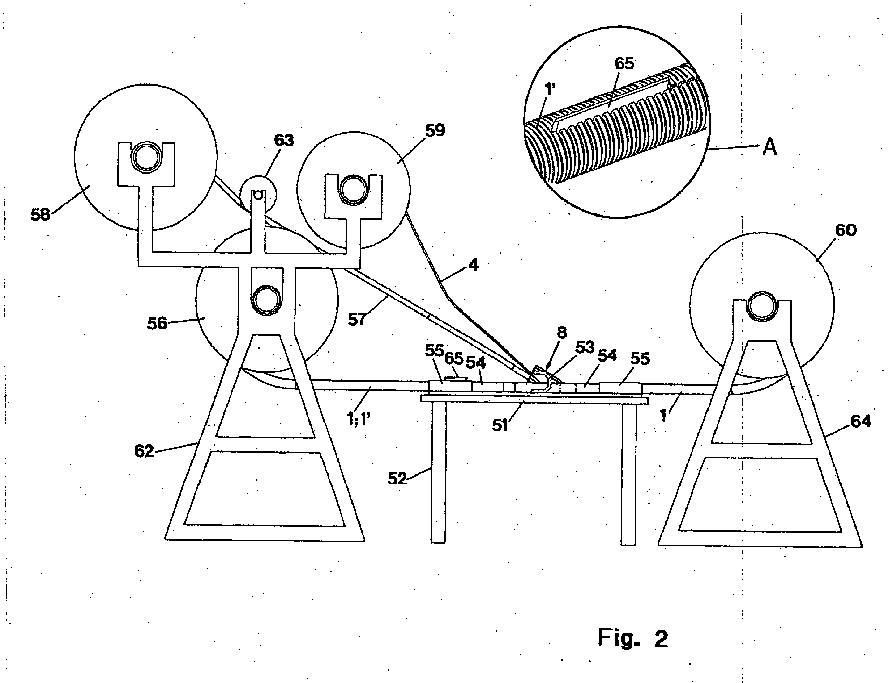

In den Figuren 1 und 2 ist eine Anordnung gezeigt, um halb automatisiert Kabel, Leitungen, und dergleichen, in Schutzschläuche, beispielsweise Wellenschläuche, die in den Figuren mit dem Bezugszeichen 1 bezeichnet sind, einzuziehen. Diese Anordnung setzt ein Hilfswerkzeug ein, das in Figur 2 zu sehen ist und in Figur 2 allgemein mit dem Bezugszeichen 8 bezeichnet ist. Dieses Hilfswerkzeug 8, das detaillierte nachfolgend anhand der weiteren Figuren beschrieben wird, ist stationär auf einer Arbeitsplattform 51, die Teil eines Tisches 52 ist, angeordnet. Das Hilfswerkzeug 8 ist nicht unmittelbar auf der Arbeitsplattform 51 montiert, sondern mittels seitlicher Halter 53 oberhalb von Führungselementen 54, die eine U-förmige Rinne bilden, gehalten.

In Figur 1 ist der Bereich des Hilfswerkzeugs 8 abgedeckt und diese Abdeckung ist mit dem Bezugszeichen 55 bezeichnet. Die Figur 1 vermittelt daher den allgemeinen Aufbau der Anordnung und soll verdeutlichen, dass im Bereich der Abdeckung 55 die verschiedenen Hilfswerkzeuge eingesetzt werden können, wie sie nachfolgend erläutert werden.

In die U-förmige Rinne 54 wird eingangsseitig des Hilfswerkzeugs 8 bzw. der Abdeckung 55 der Schutzschlauch 1 zugeführt, der.auf einer Vorratsrolle 56 bevorratet ist. Der Schutzschlauch 1, der in Längsrichtung geschlitzt ist, wird dann an dem Hilfswerkzeug 8 entlang seines Schlitzes gespreizt, so dass über den erweiterten Bereich des Hilfswerkzeugs 8 Kabel oder Leitungen 57, die auf einer weiteren Vorratsrolle 58 bevorratet sind, zugeführt werden können. Oberhalb dieser Kabel und Leitungen 57 wird ein Verschlusselement/Profilteil, das allgemein mit dem Bezugszeichen 4 bezeichnet ist und das nachfolgend noch detaillierter anhand der weiteren Figuren beschrieben wird, bevorratet auf einer weiteren Vorratsrolle 59, zugeführt, um dieses Verschlusselement 4 zwischen die Längskanten des Schutzschlauchs 1 einzulegen, um den Schlitz zu verschließen.

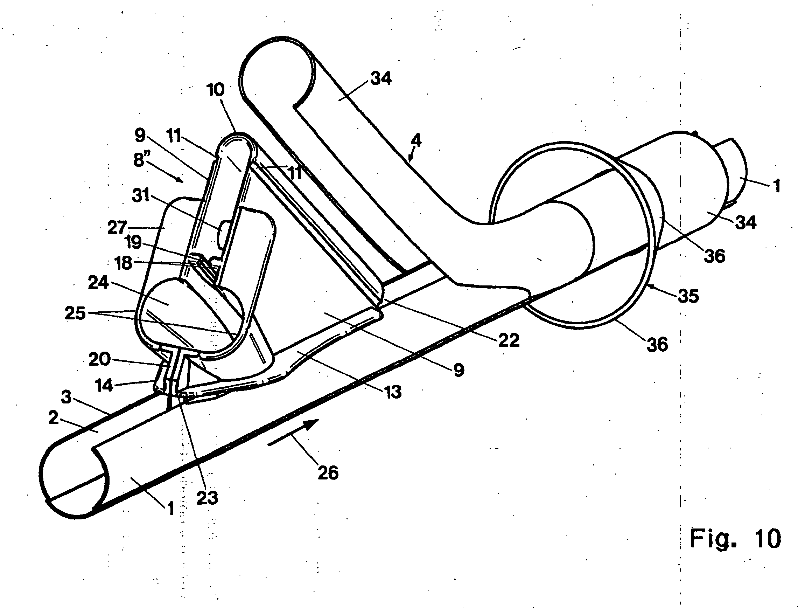

Anstelle dieses Profilteils 4 kann auch ein Verschluss-Schutzschlauch zugeführt werden, der nachfolgend anhand der Figur 10 erläutert wird.

Der fertig konfektionierte Schutzschlauch 1 mit den darin eingebrachten Kabeln und Leitungen 57 und verschlossen mit dem Verschlusselement 4 kann dann auf eine Aufnahmerolle 60 aufgewickelt werden oder auch unmittelbar vor Ort verlegt werden. Die Führungselemente 54 können am Anfang und am Ende der Arbeitsplattform 51 durch ein Abdeckelement 61 abgedeckt sein, damit der Schutzschlauch 1 sicher vor und hinter dem Hilfswerkzeug 8 geführt wird. Die Vorratsrollen 56, 58 und 59 zulaufseitig der Arbeitsplattform 51 sind an einem Gestell 62 gehalten und werden gegebenenfalls durch zusätzliche Führungsrollen 63 geführt. Gleiches gilt für die Aufnahmerolle 60, die ebenfalls an einem geeigneten Gestell 64 gehalten sein kann.

Als Schutzschlauch kann ein geschlitzter Schutzschlauch 1 eingesetzt werden, der auf der Vorratsrolle 56 bevorratet ist. Es ist aber auch die Möglichkeit gegeben, einen ungeschlitzten Schutzschlauch, mit dem Bezugszeichen 1' bezeichnet, auf der Vorratsrolle 56 zu bevorraten und diesen Schutzschlauch 1', bevor er dem Hilfswerkzeug 8 zugeführt wird, beispielsweise mit einem feststehenden Messer 65 in Längsrichtung zu schlitzen, wie dies anhand des Details "A" in den Figuren 1 und 2 dargestellt ist. Ein solches Messer 65 ist in den Anordnungen der Figuren 1 und 2 im Bereich des Abdeckelements 55 bzw. vor dem Führungselement 54 angeordnet.

Die Anordnung, wie sie in den Figuren 1 und 2 gezeigt ist, zeichnet sich durch ihre Mobilität und kleine Baugröße aus, so dass sie einfach am Einsatzort aufgestellt werden kann. Es ist verständlich, dass weitere Rollen an dem Gestell 62, beispielsweise für unterschiedliche Kabel und Leitungen, die in den Schutzschlauch 1 eingebracht werden sollen, angeordnet werden können; auch sind die Gestelle 62 und 64 nicht auf die Form, die dargestellt ist, beschränkt.

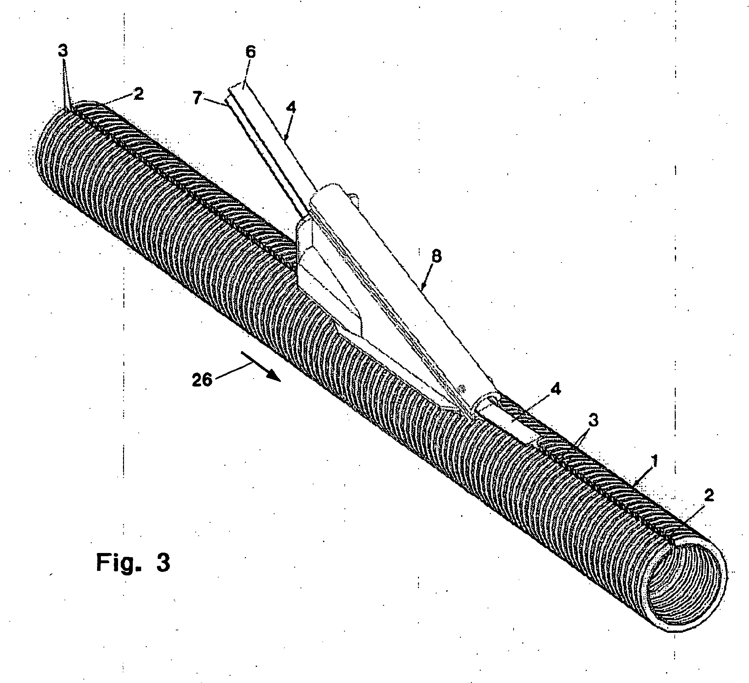

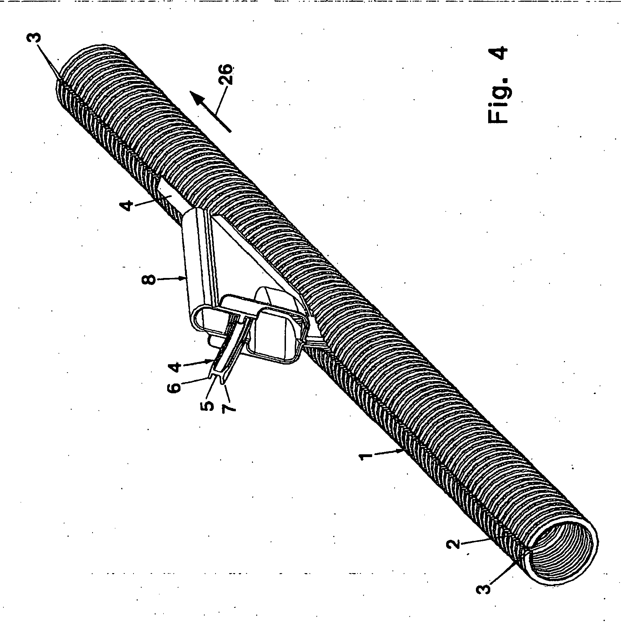

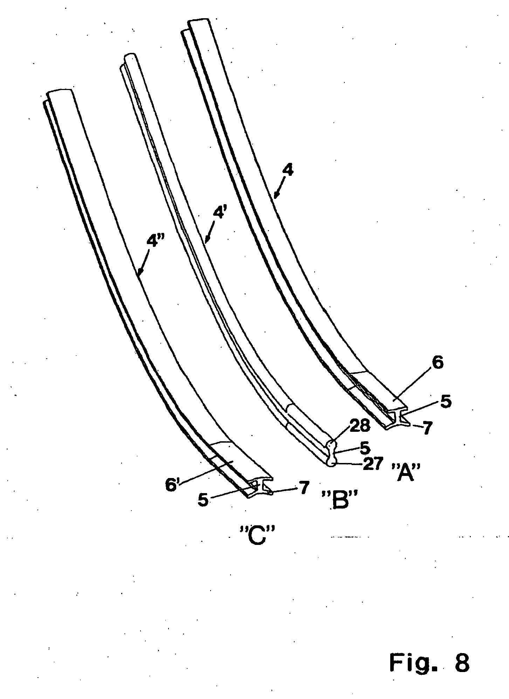

Der in den Figuren 1 und 2 gezeigte Schutzschlauch 1, bei dem es sich üblicherweise um einen Wellenschlauch aus Kunststoff handelt, ist, wie die Figuren 3 und 4 verdeutlichen, in Längsrichtung geschlitzt. Im Bereich des Schlitzes 2 ergeben sich dadurch zwei gegenüberliegende Längskanten 3, die im Wesentlichen in einer Ebene zueinander ausgerichtet sind. Um die beiden Längskanten 3 in einer Ebene ausgerichtet zu fixieren bzw. den Schutzschlauch 1 entlang des Schlitzes 2 wieder zu verschließen, wird in den Schlitz 2 ein Verschlusselement 4 bzw. ein Profilteil eingelegt. Dieses Profilteil 4 weist im Querschnitt, wie insbesondere an dem Ende des Verschlusselements 4 in Figur 4 sowie in der Darstellung dieses Profilteils 4 in Figur 8, Darstellungen A und C, zu sehen ist, eine so genannte Doppel-T-Form oder Doppel-U-Form auf, mit einem mittleren Steg 5 sowie zwei sich davon etwa rechtwinklig erstreckenden oberen Flächenelementen 6 und zwei unteren Flächenelementen 7. Der mittlere Steg 5 dieses Verschlusselements 4 legt sich zwischen die beiden Längskanten 3 des Schutzschlauchs 1 ein, während die beiden oberen Flächenelemente 6 den oberen Randbereich des Schutzschlauchs 1 entlang der Längskanten 3 überdecken und die unteren Flächenelemente 7 den Bereich des Schutzschlauchs 1 entlang der Längskanten 3 unterlegen. Dadurch werden die beiden Längskanten 3 des Schutzschlauchs 1 dann, wenn das Verschlusselement 4 in dem Schlitz 2 eingelegt ist, in ihrer Lage fixiert.

Wie anhand des Profilquerschnitts des Verschlusselements 4 in Figur 4 zu erkennen ist, sind die beiden unteren Flächenelemente 6 im Querschnitt gesehen leicht bogenförmig ausgebildet, wobei der Radius der Krümmung der beiden unteren Flächenelemente 7 kleiner ist als der Innenradius des Schutzschlauchs 1, so dass entsprechend auch die Öff nungsbreite der Nut zwischen dem oberen Flächenelement 6, dem unteren Flächenelement 7 und dem mittleren Steg 5 größer ist als die Wandungsdicke des Schutzschlauchs 1 im Bereich des Schlitzes 2. Dadurch kann das Verschlusselement 4 in den Schlitz mit der Anordnung, die in den Figuren 1 und 2 gezeigt wird, eingelegt werden, ohne dass es sich an den Längskanten 3 des Schutzschlauchs 1 verklemmt.

Bevorzugt ist das Profilelement bzw. Verschlüsselement 4 aus einem weichen, im Wesentlichen nachgiebigen Material gebildet, damit sich das Verschlusselement 4 den Längskanten 3 des Schutzschlauches 1 anpassen kann, Bevorzugt wird das Verschlusselement 4 aus Polypropylen (PP) hergestellt. Das Verschlusselement 4 kann eingefärbt sein, so dass es in seiner Farbe der Farbe des Schutzschlauchs 1 angepasst ist; es besteht aber auch die Möglichkeit, dieses Verschlusselement 4 aus einem farblosen und leicht transparenten Material herzustellen, so dass die Grundfarbe des Schutzschlauchs 1 durch das Verschlusselement 4 hindurch leuchtet und somit relativ unauffällig ist.

Der Vorgang, ein solches Verschlusselement 4 in den Schlitz 2 einzulegen, wird durch die Anordnung mit dem Hilfswerkzeug 8 der Figuren 1 und 2 erleichtert und kann schnell ausgeführt werden, insbesondere auch dann, wenn Kabellängen konfektioniert werden sollen, die Längen bis zu hundert Metern oder mehr haben.

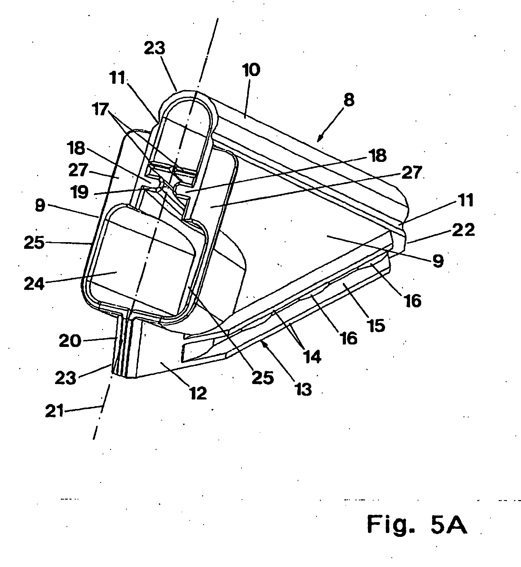

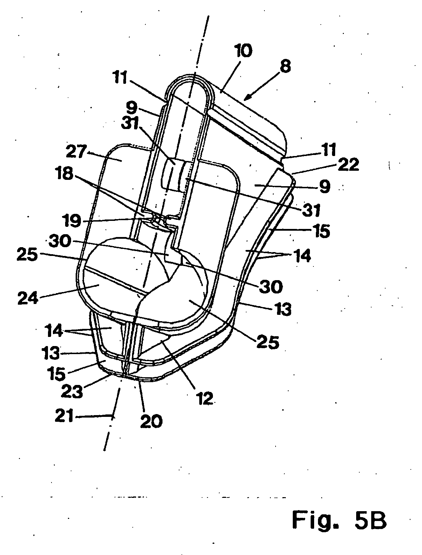

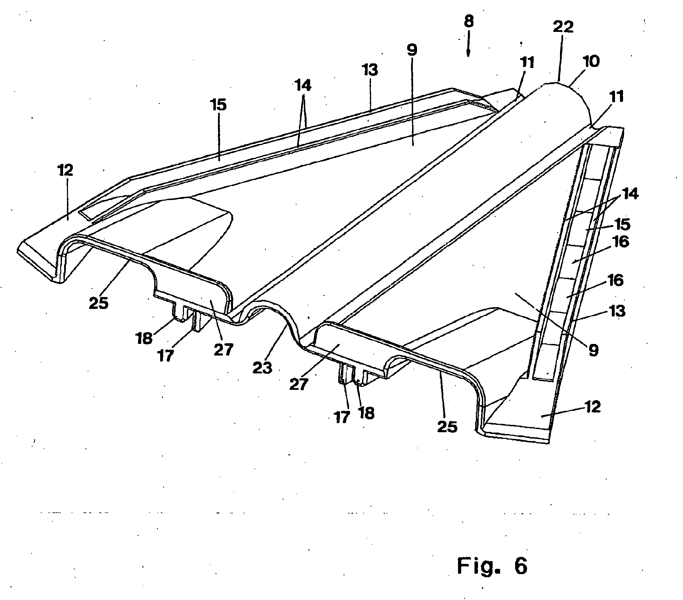

Das Hilfswerkzeug 8 als zentrale Einheit der Anordnung der Figuren 1 und 2 ist, wie insbesondere die Figuren 5 bis 7 zeigen, aus zwei Teilkörpern 9, die über ein oberes Verbindungsteil 10 verbunden sind, aufgebaut. Die zwei Teilkörper 9 des Hilfswerkzeugs 8, das aus Kunststoff gefertigt ist, sind jeweils mit dem linken und dem rechten Teilkörper 9 über ein Filmscharnier 11 verbunden, so dass die beiden Teilkörper 9 von einer Stellung, die in Figur 6 gezeigt ist, in der sie aus Kunststoff gespritzt werden, zu der Stellung, die in Figur 5A gezeigt ist, geschwenkt werden können.

Die beiden Teilkörper 9 haben, in Draufsicht, wie sie in Figur 6 zu sehen ist, eine etwa dreieckige Grundform. Entlang der unteren Kante 12 jedes Teilkörpers 9 befinden sich Führungsteile, die allgemein mit dem Bezugszeichen 13 bezeichnet sind, bestehend aus zwei parallel zueinander mit Abstand angeordneten Stegen 14. Zwischen diesen beiden Stegen 14 ergibt sich eine Nut 15, die so dimensioniert ist, dass darin die Längskante 3 des Schutzschlauchs 1 jeweils geführt werden kann, wie dies die Figuren 3 und 4 zeigen. Das vordere Ende und das hintere Ende dieser Führungsteile 13 bzw. der Stege 14 sind abgeschrägt, um das Einführen der Längskanten 3 des Schutzschlauchs 1 zu erleichtern. Auf der Bodenfläche der Nut 15 sind wellenartig verlaufende Vorsprünge 16 ausgebildet, die dazu dienen, die Reibung der Längskanten 3 des Schutzschlauchs 1 an der Bodenfläche der Nut 15 zu verringern.

Auf der Innenseite der Teilkörper 9 befinden sich im oberen Bereich jeweils gegenüberliegend ein erster Steg 17 und ein zweiter Steg 18. Die Stege 17 weisen, ausgehend von der Grundfläche des Teilkörpers 9, eine solche Länge oder Höhe auf, dass sie aneinander stoßen. Dagegen besitzen die beiden zweiten Stege 18 eine solche Höhe, dass zwischen den beiden Stegen ein Freiraum oder Spalt 19 verbleibt. Weiterhin sind die beiden hinteren Endabschnitte 20 so nach innen gebogen, dass sie sich an ihrem Ende entlang der Teilungslinie dieses Hilfswerkzeugs, die mit dem Bezugszeichen 21 bezeichnet ist, treffen. Während die beiden hinteren Endabschnitte 20 mit ihren Enden aneinander stoßen, sind die Randbereiche der Teilkörper 9, an denen sich außen die jeweiligen Führungsteile 13 befinden, auf der Innenseite voneinander beabstandet. Dieser Abstand entspricht demjenigen Abstand, der auch durch die beiden ersten Stege 17 im oberen Bereich festgelegt ist. Es ist darauf hinzuweisen, dass sich sowohl die ersten Stege 17 als auch die zweiten Stege 18 bis zu dem hinteren Ende 22 erstrecken und von dem vorderen Ende 23 aus, das in Figur 5A zu sehen ist, bogenförmigen nach unten gewölbt verlaufen, wie dies anhand der Figuren 1 und 2 gut zu erkennen ist.

Unterhalb der zweiten Stege 18 befindet sich ein Hohlraum bzw. ein erweiterter Bereich 24, der durch zwei Ausbuchtungen 25 an jedem der Teilkörper 9 gebildet ist. Dieser erweiterte Bereich 24 dient als Einlauföffnung oder Einlauftrichter, um in dieses Hilfswerkzeug 8 Kabel, Drähte, Leitungen, oder dergleichen, die in den Wellenschlauch 1 eingezogen werden sollen, einlaufen zu lassen. In der Draufsicht ist der erweiterte Bereich 24 rechteckig ausgebildet; er kann aber auch eine runde oder ovale Form haben, in Abhängigkeit davon, für welche Faserbündelquerschnitte das Hilfswerkzeug 8 eingesetzt werden soll.

Wie die Figuren 1 und 2, aber auch insbesondere die Figuren 3 und 4, zeigen, dient das Hilfswerkzeug 8 dazu, sowohl den Wellenschlauch 1 entlang des Schlitzes 2 zu öffnen, um ein Kabelbündel 57 (Figuren 1 und 2) in den Schutzschlauch 1 einzuführen, als auch anschließend diesen Schlitz 2 wieder mit einem Verschlusselement 4, das bereits vorstehend erläutert wurde, zu verschließen. Für diesen Vorgang wird der geschlitzte Schmutzschlauch 1 in das vordere Ende 23 des Hilfswerkzeugs 8, und zwar dort an den beiden schräg zulaufenden Endabschnitten 20, eingesetzt. Durch die keilförmige Erweiterung der Endabschnitte 20 werden beim Vorschieben des Schutzschlauchs die Längskanten 3 des Schutzschlauchs 1 entlang des Schlitzes 2 auseinandergedrückt und dann in die beiden Nuten 15 zwischen den Stegen 14 eingeführt; der Schlauch 1 gleitet dabei mit den Längskanten 3 auf den wellenförmigen Vorsprüngen 16. Nachdem der Schutzschlauch 1 in das Hilfswerkzeug 8 eingesetzt ist, so dass die Längskanten 3 des Schutzschlauchs 1 zwischen den Führungsteilen 13 gehalten sind, wird das Verschlusselement 4 zwischen den zweiten Stegen 18 unterhalb der ersten Stege 17 eingeführt, so dass der mittlere Steg 5 des Verschlusselements 4 in dem Spalt 19 zwischen den zweiten Stegen 18 läuft. Das Verschlusselement 4 wird dann weiter in das Hilfswerkzeug 8 eingeschoben, bis es an dem hinteren Ende 22, durch die Stege 17 und 18 geführt, austritt. An diesem hinteren Ende 22 verlaufen die Stege 17, 18 etwa in der Ebene der äußeren Führungsteile 13, so dass das Verschlusselement 4 zwischen die Längskanten 3 des Schutzschlauchs in den Schlitz 2 eingeführt wird. Diese Arbeitsstellung des Schutzschlauchs 1, des Hilfswerkzeugs 8 und des Verschlusselements 4 ist in den Figuren 3 und 4 dargestellt. Nun werden die Kabel 57 (siehe Figuren 1 und 2), die auf den Vorratsrollen 58 bevorratet sind, die in den Schutzschlauch 1 eingebracht werden sollen, in den erweiterten Bereich 24 als Bündel, oder auch einzeln, eingesetzt und eine bestimmte Länge wird in den Schutzschlauch 1 hinein vorgeschoben. Nun kann der Schutzschlauch 1 entlang des Hilfswerkzeugs 8 gezogen werden, wie dies durch den Richtungspfeil 26 in den Figuren 3 und 4 angedeutet ist. Während dieses Vorgangs läuft zum einen das Kabelbündel in den erweiterten Bereich 24 ein und zum anderen wird hinter dem Hilfswerkzeug 8 das Verschlusselement 4 in den Schlitz 2 des Schutzschlauchs 1 eingelegt. Der fertig konfektionierte Schutzschlauch 1 wird, ausgangsseitig an der Arbeitsplattform 51, durch das Führungselement 54 und das Abdeckelement 61 geführt, auf die an dem Gestell 64 gehaltene Aufnahmerolle 40 aufgewickelt. Nach Erreichen einer vorgegebenen Länge des konfektionierten Schutzschtauchs 1 wird dieser im Bereich hinter dem Abdeckelement 61 abgeschnitten, so dass die nächste Länge des Schutzschlauchs konfektioniert werden kann, gegebenenfalls auch unter Ändern der Kabel und Leitungen, die in den Schutzschlauch 1 einzuziehen sind.

Um das Hilfswerkzeug 8 zu verstärken, sind an dem vorderen Ende 23 zwei Laschen 27 vorgesehen, bei denen es sich um Flächenelemente handelt, die senkrecht von der Außenseite der Teilkörper 9 an dem Rand dieser Teilkörper 9 vorstehen und nach unten in die Außenkontur der Ausbuchtungen 25 übergehen.

Das Hilfswerkzeug 8 an der Arbeitsplattform 51 kann auch so gehandhabt werden, dass, zum Einlegen von Kabelbühdeln in den erweiterten Bereich 24, die beiden Teilkörper 9 um die Filmscharniere 11 an dem oberen Verbindungsteil 10 auseinandergeklappt werden.

Es ist anhand der Figur 6 ersichtlich, dass das Hilfswerkzeug 8 aus Kunststoff mit einem einfachen Spritzwerkzeug gefertigt werden kann und somit ein kostengünstiges Hilfswerkzeug als Teil der Anordnung der Figuren 1 und 2 darstellt.

Das Hilfswerkzeug 8 besitzt etwa eine Länge entlang der unteren Kante, an der sich die Führungsteile 13 befinden, von etwa 80 bis 100 Millimetern, eine Höhe an dem vorderen Ende 23 von etwa 50 Millimetern, und die Öffnungsweite des erweiterten Bereichs 24 beträgt etwa 20 Millimeter. Die Breite der Nut 15 sollte etwa 2 bis 4 Millimeter betragen; die Nuten 15 sollten in jedem Fall eine solche Breite aufweisen, dass sie Wandstärken von Schutzschläuchen 1 (bzw. Wellenschläuchen), bei denen das Hilfswerkzeug 8 eingesetzt werden soll, so aufnehmen können, ohne darin zu verklemmen. Auch sollten die Stege 14 eine solche Höhe aufweisen, dass die Längskanten 3 eines Schutzschlauchs 1 sicher in der Nut 15 geführt werden.

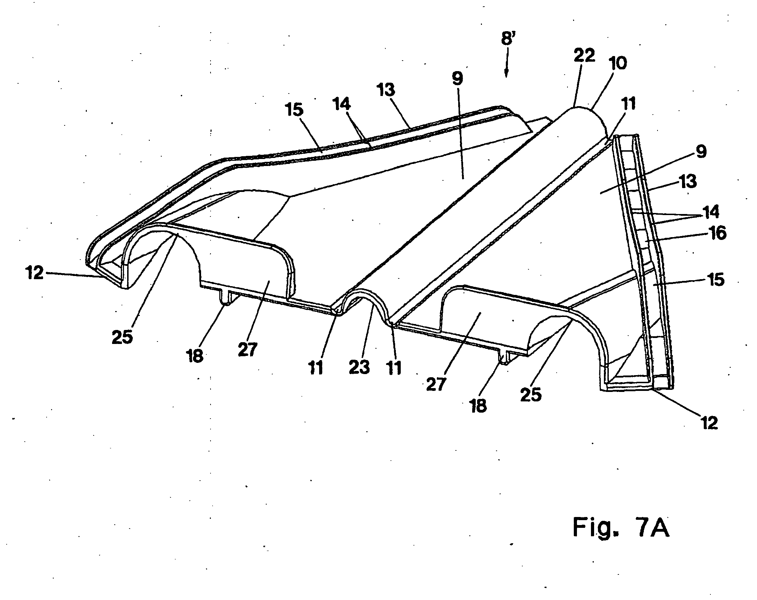

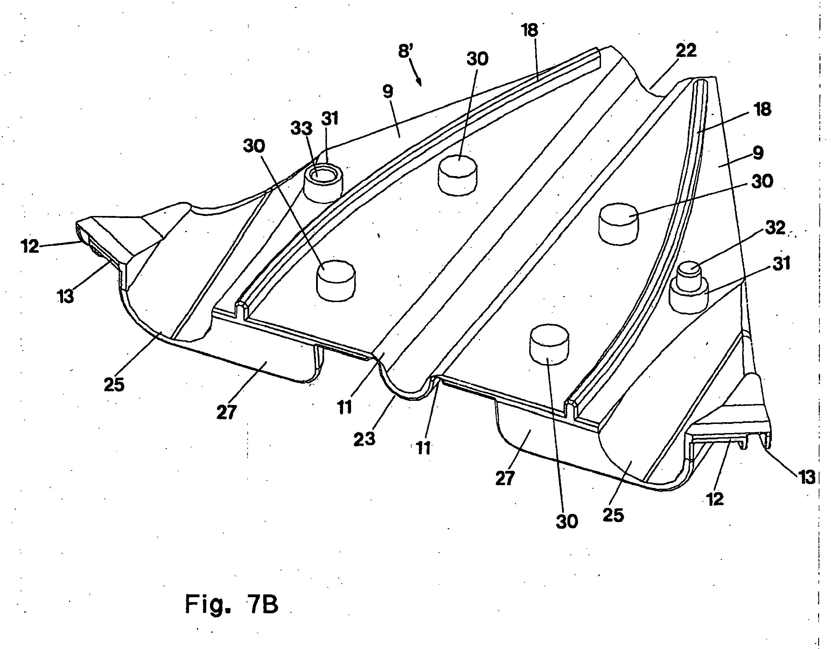

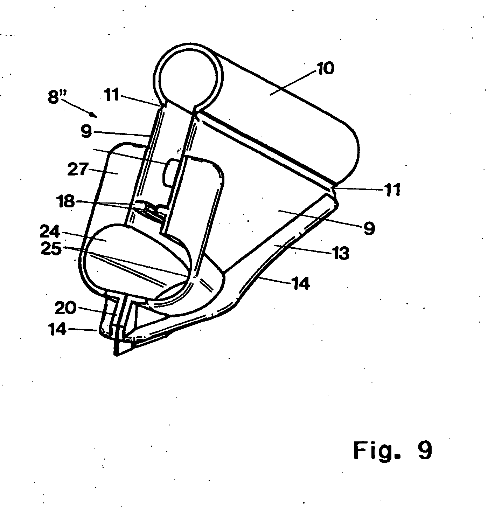

In den Figuren 5B, 7A und 7B sowie in den Figuren 9 und 10 sind weitere Ausführungformen des Hilfswerkzeugs dargestellt, die jeweils in den Figuren 1 und 2 eingesetzt werden können.

Während das Hilfswerkzeug 8, wie es in Figur 5A dargestellt ist, einen im Querschnitt quadratischen oder rechteckigen, erweiterten Bereich 24 besitzt, ist dieser erweiterte Bereich 24 in der Ausführungsform der Figur 5B des Hilfswerkzeugs, in dieser Figur mit dem Bezugszeichen 8' bezeichnet, oval ausgeführt, wobei die größte Breite dieses Querschnitts senkrecht zu der Teilungslinie 21 ausgerichtet ist. Eine solche Querschnittsform ermöglicht, dass mehrere Leitungen nebeneinander in das Hilfswerkzeug 8' eingeführt werden können.

Weiterhin sind bei dem Hilfswerkzeug 8' (Figuren 5B und 7A) nur die zweiten Stege 18 vorgesehen, während die ersten Stege 17, wie sie in dem Hilfswerkzeug 8 der Figur 5A vorgesehen sind, in dieser Ausführungsform fehlen. Die zweiten Stege 18 sind wiederum so positioniert, dass dazwischen ein Spalt 19 gebildet wird, um in dem Spalt den mittleren Steg 5 eines Verschlusselements 4 zu führen.

Um die beiden Stege 18 so auf Abstand zu halten, dass zwischen deren Enden ein gleichmäßiger Spalt 19 gebildet wird, sind, wie die Figur 7B zeigt, Distanzteile 30 und 31 auf den Innenflächen der Teilkörper 9 vorgesehen. Jeweils zwei solcher Distanzteile sind auf jedem Teilkörper 9 zwischen dem zweiten Steg 18 und dem jeweiligen Filmscharnier 11 angeordnet, derart, dass beim Aufeinanderlegen der beiden Teilkörper 9, indem diese um die Filmscharniere 11 geschwenkt werden, die Stirnseiten der Distanzteile 30 aufeinander liegen. Die zwei Distanzteile 31, die auf der zu dem zweiten Steg außen liegenden Fläche des Teilkörpers 9 angeordnet sind, besitzen zum einen einen Zapfen 32 und zum anderen ein Loch 33, so dass diese beiden Distanzteile 31, in denen der Zapfen 32 in das Loch 33 eingreift, zusätzlich die beiden Teilkörper 9 zentrieren.

Weiterhin sind bei dem Hilfswerkzeug 8' (Figur 5B) die Führungsteile 13 von dem vorderen Ende 23 bis zu dem hinteren Ende 22 der Teilkörper 9 ausgebildet. Somit wird die gesamte Länge der Teilkörper 9 ausgenutzt, um in den Nuten 15 die Längskanten 3 eines. Schutzschlauchs 1 zu führen. Um den Schlitz 2 eines Schutzschlauchs 1 ausreichend weit zu spreizen und damit zu öffnen, so dass die gesamte Querschnittsbreite des erweiterten Bereichs 24 genutzt werden kann, um Kabel und Leitungen 57 (Figuren 1 und 2) in den Schutzschlauch 1 einzuführen, verlaufen die Führungsteile 13 zunächst schräg nach außen, während sie ihren Abstand zueinander zu dem hinteren Ende 22 hin wieder verringern. Der größte Abstand zwischen den beiden gegenüberliegenden Nuten 15 ist etwa bei einem Drittel der Länge der Nuten 15 vorhanden.

Figur 9 zeigt eine Ausführungsform eines Hilfswerkzeugs, das allgemeinem mit dem Bezugszeichen 8" bezeichnet ist, die im Wesentlichen dem Hilfswerkzeug entspricht, wie es in Figur 5B gezeigt ist. Insofern sind Teile des Hilfswerkzeugs 8" in Figur 9, die in ihrer Funktionsweise denjenigen des Hilfswerkzeugs 8' in Figur 5B entsprechen, mit denselben Bezugszeichen bezeichnet, und die Ausführungen können entsprechend auf diese Ausführungsform übertragen werden.

Das Hilfswerkzeug 8" der Figur 9 besitzt im Gegensatz zu der Ausführungsform des Hilfswerkzeugs 8' der Figur 5B nur einen einzelnen seitlichen Steg 14, oberhalb oder unterhalb dem die Längskanten 3 eines Schutzschlauchs 1 im Bereich des Schlitzes 2 verschoben werden. Weiterhin ist das obere Verbindungsteil 10 zwischen den beiden Scharnieren 11 im Querschnitt kreisförmig ausgebildet, wobei der Außendurchmesser dieses Verbindungsteils 10 etwa dem Innendurchmesser eines Verschluss-Schutzschlauchs 34 entspricht, der in der Darstellung der Figur 10 zu sehen ist und der dazu dient, den Schlitz 2 des Schutzschlauchs 1 abzudecken und zu verschließen. Dieser Verschluss-Schutzschlauch 34 wird alternativ zu dem Profilteil 4, wie es vorstehend erläutert, eingesetzt und mittels der Anordnung der Figuren 1 und 2 zu der Arbeitsplattform 51 zugeführt und auf den Schutzschlauch 1 aufgeklemmt. Dieser Verschluss-Schutzschlauch 34 kann mit dem Verbindungsteil 10 des Hilfswerkzeugs 8" der Figur 9 geführt werden. Um den Verschluss-Schutzschlauch 34 auf den Schützschlaüch 1 aufzuklemmen, kann ein Klemmwerkzeug 35 hinter dem Hilfswerkzeug angeordnet werden, wie dies die Figur 10 zeigt. Dieses Klemmwerkzeug 35 kann beispielsweise trichterförmig ausgebildet sein und sich mit seinem kleinen Querschnitt 36 an die Außenseite des Schutzschlauchs 1 und des Verschluss-Schutzschlauchs 34 anlegen, während der große Querschnitt 37 als Einlauftrichter für den Verschluss-Schutzschlauch 34 dient. Das Klemmwerkzeug 35 ist stationär an der Arbeitsplattform 51 der Anordnung der Figuren 1 und 2 unmittelbar hinter dem Hilfswerkzeug 8, in einer Zuordnung zu diesem Hilfswerkzeug 8, wie dies Figur 10 zeigt, positioniert.

Das Hilfswerkzeug, das in Figur 10 zu sehen ist, entspricht in seinem Aufbau demjenigen, das in Figur 5B dargestellt ist, und ist demzufolge mit dem Bezugszeichen 8' bezeichnet.

Das Verschlusselement bzw. Profilteil 4, das mit der Anordnung der Figuren 1 und 2 zum Verschließen des Schlitzes 2 des Schutzschlauchs 1 eingesetzt wird, sollte eine Querschnittsform derart aufweisen, dass es mit seinen oberen Flächenelementen 6 und unteren Flächenelementen 7 sicher in dem Schlitz 2 des Schutzschlauchs 1 gehalten wird. Es hat sich in der Praxis gezeigt, dass ein solches Verschlusselement 4 auch dann sicher in dem Schlitz 2 gehalten wird, wenn der Schutzschlauch 1 um seine Achse verdreht wird oder aber in engen Radien verlegt wird. Auch kann das Verschlusselement 4 jederzeit wieder aus dem Schlitz 2 herausgezogen und anschließend, unter Zuhilfenahme der Anordnung der Figuren 1 und 2 mit dem Hilfswerkzeug 8, wieder in den Schlitz 2 eines Schutzschlauchs 1 eingesetzt werden.

In Figur 8 sind in den drei verschiedenen Ansichten A, B und C drei verschiedene Profilteile 4, 4' und 4" gezeigt, wobei das Profilteil 4 entsprechend Ansicht A dasjenige ist, das auch in den Figuren 1 und 2 zu sehen ist.

Das Profilteil 4' entsprechend Ansicht B zeigt eine Querschnittsform des Profilteils, das anstelle der oberen Flächenelemente 6 und der unteren Flächenelemente 7 des Profilteils 4 der Figur 8, Ansicht A, einen oberen Wulst 28 und einen unteren Wulst 29 aufweist. Diese Wulste 28, 29 legen sich dann gegen die Oberseite und die Unterseite des Schutzschlauchs 1 entlang der Längskanten 3 im Bereich des Schlitzes 2 an, um den Schlitz 2 zu verschließen. Je nach der Dicke des oberen Wulstes 28 kann es erforderlich sein, die Stege 17 und 18 auf der Innenseite der Teilkörper 9 des Hilfswerkzeugs 8 zu ändern derart, dass dieses Profilteil 4' gut gleitend in dem Hilfswerkzeug 8 geführt wird.

Das Profilteil 4" entsprechend Ansicht C ist in seinern Querschnittsprofil vergleichbar mit demjenigen des Profilteils 4 nach Ansicht A, allerdings sind auch die oberen Flächenelemente 6' (freien Schenkel) bogenförmig ausgebildet, so dass sich diese Flächenelemente 6' der Krümmung des Außenumfangs eines Schutzschlauchs anpassen. Allerdings muss bei dieser Art des Profilteils 4" die Höhe des Stegs 5 der Wandungsdicke des Schutzschlauchs angepasst sein, während die Ausführüngsform nach Ansicht A einen gewissen Spielraum bei der Wandungsdicke des Schutzschlauchs zulässt.

Das Profilteil 4, wie es in Figur 8, Ansicht A, zu sehen ist, weist eine Breite entlang der oberen Flächenelemente 6 von etwa 4 bis 10 Millimetern auf, während der Steg eine Höhe von 2 bis 7 Millimeter, in Abhängigkeit von der Wandungsdicke des Schutzschlauchs 1, besitzt.

Die Wulste 28 und 29 des Profilteils 4', wie es in Figur 8, Ansicht B, gezeigt ist, haben einen Durchmesser von 3 bis 6 Millimetern. Es ist verständlich, dass die Profilformen, wie sie in den Figuren 7A und 7B gezeigt sind, kombiniert werden können; zum Beispiel kann der Wulst 29, wie er in Figur 8, Ansicht B, zu sehen ist, anstelle der unteren Flächenelemente 7 des Profilteils 4 in Figur 8, Ansicht A, eingesetzt werden.

Die Dimensionen der Profilteile 4' und 4" sind mit denjenigen vergleichbar, die vorstehend in Bezug auf das Profilteil 4 angegeben sind.

## Patentansprüche

1. Anordnung zum Konfektionieren von Schutzschläuchen (1) und darin eingebrachten Kabeln, Leitungen (57), und dergleichen,
mit einem Vorrat (56) eines Schutzschlauchs (1), der in Längsrichtung geschlitzt ist, mit einem Vorrat (58) mindestens eines Kabels und/oder mindestens einer Leitung (57), oder dergleichen, und mit einem Hilfswerkzeug (8; 8', 8"), das an einer Arbeitsplattform (51) feststehend montiert ist,
wobei an der Arbeitsplattform (51) Führungselemente (54) angeordnet sind, um den Schutzschlauch (1) zu dem Hilfswerkzeug (8; 8'; 8") zuzuführen und auslaufseitig davon wegzuführen, wobei die Vorräte (56; 58) des Schutzschlauchs (1) und zumindest entweder des mindestens einen Kabels und/oder der mindestens einen Leitung (57), oder dergleichen, einlaufseitig des Hilfswerkzeugs (8; 8'; 8") gehalten sind, um sie zu dem Hilfswerkzeug (8; 8'; 8") zuzuführen, wobei das Hilfswerkzeug (8; 8'; 8") so aufgebaut ist, um den Schutzschlauch (1), falls erforderlich, zu spreizen und das mindestens eine Kabel und/oder die mindestens eine Leitung (57) in den Schutzschlauch (1) einzuführen, und wobei Schutzschlauch (1), Kabel und/oder Leitung(en) (57) mit im Wesentlichen gleicher Geschwindigkeit zu der Arbeitsplattform (51) zugeführt und von der Arbeitsplattform (51) abgeführt werden,
**dadurch gekennzeichnet,**
**dass** weiterhin ein Vorrat (59) eines Verschlusselements (4; 4'; 4"; 34) vorgesehen ist, mit dem der Schlitz (2) des Schutzschlauchs (1) verschließbar ist, wobei das Verschlusselement (4; 4'; 4"; 34) hinter der Einführstelle des mindestens einen Kabels und/oder der mindestens einen Leitung (57) zu dem Schutzschlauch (1) mit im Wesentlichen gleicher Geschwindigkeit wie der Schutzschlauch (1) zugeführt wird und der Schlitz (2) des Schutzschlauchs (1) damit verschlossen wird, und dass auslaufseitig des Hilfswerkzeugs (8; 8'; 8") eine Aufnahmeeinheit (60) angeordnet ist, um den konfektionierten Schutzschlauch (1) mit den darin eingebrachten Kabeln, Leitungen (57), und dergleichen, aufzunehmen.

2. Anordnung nach Anspruch 1, **dadurch gekennzeichnet, dass** die Vorräte (56, 58, 59) des Schutzschlauchs (1), der Kabel und/oder Leitungen (57) und des Verschlusselements (4; 4'; 4"; 34) auf Vorratsrollen (56, 58, 59) aufgenommen sind.

3. Anordnung nach einem der Ansprüche 1 oder 2, **dadurch gekennzeichnet, dass** ein Verschlusselement (4; 4'; 4") eingesetzt ist, das als gesondertes Profilteil (4; 4'; 4") ausgebildet ist und die Längskanten (3) des Schutzschlauchs (1) entlang des Schlitzes (2) in einer Ebene zueinander ausgerichtet hält, indem es durch das Hilfswerkzeug (8; 8'; 8") zwischen die Längskanten (3) des Schutzschlauchs (1) einlegt wird.

4. Anordnung nach Anspruch 3, **dadurch gekennzeichnet, dass** das Verschlusselement (4; 4") im Querschnitt gesehen in Form eines doppelten "U" oder eines doppelten "T" ausgeführt ist, so dass ein mittlerer Steg (5) dieses Profilteils (4; 4") zwischen den Längskanten (3) einliegt und die Oberseite des Schlauchs (1) entlang der Längskanten (3) durch jeweilige Flächenelemente (6) des Profilteils (4; 4") überdeckt ist und die Innenseite des Schlauchs (1) entlang der Längskanten (3) durch jeweilige Flächenelemente (7) des Profilteils (4; 4") unterlegt ist.

5. Anordnung nach Anspruch 3 oder 4, dadurch gekenntzeichnet, dass zumindest die auf der Innenseite des Schutzschlauchs (1) liegenden freien Schenkel (7) des Profilteils (4; 4") eine Krümmung mit einem Krümmungsradius aufweisen, der etwa dem Krümmungsradius der Innenseite des Schutzschlauchs (1) entspricht.

6. Anordnung nach Anspruch 1, **dadurch gekennzeichnet, dass** das Verschlusselement durch einen Verschluss-Schutzschlauch (34) gebildet ist, der in Längsrichtung einen Schlitz aufweist.

7. Anordnung nach einem der Ansprüche 1 bis 6, **dadurch gekennzeichnet, dass** das Hilfswerkzeug (8; 8'; 8") zwei Teilkörper (9), die an ihrer einen Längsseite verbunden sind und zwischen denen ein Hohlraum oder Zwischenraum (24) zum Führen von Kabeln, Leitungen, und dergleichen, gebildet ist, aufweist und Führungsteile (13) auf den Außenflächen der Teilkörper (9) aufweist, mit denen der dem Hilfswerkzeug (8; 8'; 8") zugeführte Schutzschlauch (1), entlang seiner Längskanten (3) geführt, hindurchgeschoben und/oder hindurchgezogen werden kann.

8. Anordnung nach Anspruch 7, **dadurch gekennzeichnet, dass** die zwei Teilkörper (9) mit einem Scharnierteil (11) verbunden sind und dass die Teilkörper (9) entlang des Scharnierteils (11) zu öffnen und wieder zu schließen sind.

9. Anordnung nach Anspruch 7 oder 8, **dadurch gekennzeichnet, dass** die Führungsteile (13) und/oder Führungselemente durch Stege (14; 17, 18) gebildet sind.

10. Anordnung nach Anspruch 9, **dadurch gekennzeichnet, dass** mindestens zwei Stege (14) jedes Führungsteils (13) jeweils so angeordnet sind, dass eine U-förmige Rinne (15) gebildet ist, in der die jeweilige Längskante (3) des Schutzschlauchs (1) geführt wird.

11. Anordnung nach einem der Ansprüche 7 bis 10, **dadurch gekennzeichnet, dass** sich die Führungsteile (13; 14, 15) von dem einen Ende bis zu dem anderen Ende der Teilkörper (9) erstrecken.

12. Anordnung nach einem der Ansprüche 7 bis 11, **dadurch gekennzeichnet, dass** die Führungselemente (17, 18) im Bereich des Hohlraums (24) zum Führen eines zwischen die Längskanten (3) des Schutzschlauches (1) einzulegendes Verschlusselements (4; 4'; 4") (Keder) ausgebildet sind.

13. Anordnung nach Anspruch 12, **dadurch gekennzeichnet, dass** jeweils ein auf der Innenseite jedes Teilkörpers (9) angeordneter Steg (17) eine solche Höhe aufweist, dass die freien Kanten der gegenüberliegenden Stege (17) aneinander stoßen.

14. Anordnung nach einem der Ansprüche 1 bis 13, **dadurch gekennzeichnet, dass** zur Zuführung eines in Längsrichtung geschlitzten Schutzschlauchs (1) ein ungeschlitzter Schutzschlauch (1') eingesetzt wird, der eingangsseitig des Hilfswerkzeugs (8; 8'; 8") durch eine Schlitzeinrichtung (47) in Längsrichtung geschlitzt wird.

15. Anordnung nach Anspruch 14, **dadurch gekennzeichnet, dass** die Schlitzeinrichtung durch ein feststehendes Messer (47) gebildet ist.

## Claims

1. An arrangement for assembling protective tubes (1) carrying cables, wires (57), and similar items within,
comprising a supply (56) of a protective tube (1) which is slit in longitudinal direction, comprising a supply (58) of at least one cable and/or at least one wire (57), or the like, and comprising an auxiliary tool (8; 8'; 8") fixedly mounted on a work platform (51),
wherein guide elements (54) are arranged on the work platform (51) to move the protective tube (1) towards the auxiliary tool (8, 8'; 8") and away therefrom at the outlet side, wherein the supplies (56; 58) of the protective tube (1) and at least either of the at least one cable and/or of the at least one wire (57), or the like, are held at the inlet side of the auxiliary tool (8; 8'; 8") to supply them to the auxiliary tool (8; 8'; 8"), wherein the auxiliary tool (8; 8'; 8") is configured to spread the protective tube (1), if necessary, and to introduce the at least one cable and/or the at least one wire (57) into the protective tube (1), and wherein protective tube (1), cable and/or wire(s) (57) are supplied at substantially the same speed to the work platform (51) and are discharged from the work platform (51),
**characterized in**
**that** furthermore a supply (59) of a closing element (4; 4'; 4"; 34) is provided, with which the slit (2) of the protective tube (1) can be closed, wherein the closing element (4; 4'; 4"; 34) is supplied behind the introduction point of the at least one cable and/or of the at least one wire (57) to the protective tube (1) at substantially the same speed as the protective tube (1), and the slit (2) of the protective tube (1) is thereby closed, and that at the outlet side of the auxiliary tool (8; 8'; 8") a receiving unit (60) is arranged to receive the assembled protective tube (1) carrying the cables, wires (57), and similar items within.

2. The arrangement according to claim 1, **characterized in that** the supplies (56, 58, 59) of the protective tube (1), the cable and/or wires (57) and of the closing elements (4; 4'; 4"; 34) are received on supply rolls (56, 58, 59).

3. The arrangement according to any one of claims 1 or 2, **characterized in that** a closing element (4; 4'; 4") is used that is designed as a separate profiled piece (4; 4'; 4") and holds the longitudinal edges (3) of the protective tube (1) along the slit (2) in a plane so as to aligned relative to each other **in that** it is inserted by the auxiliary tool (8; 8'; 8") between the longitudinal edges (3) of the protective tube (1).

4. The arrangement according to claim 3, **characterized in that** the closing element (4; 4"), when viewed in cross section, is shaped in the form of a double "U" or a double "T", so that a central web (5) of said profiled piece (4; 4") is inserted between the longitudinal edges (3) and the upper side of the tube (1) is covered along the longitudinal edges (3) by respective surface elements (6) of the profiled piece (4; 4"), and the inside of the tube (1) is supported along the longitudinal edges (3) by respective surface elements (7) of the profiled piece (4; 4").

5. The arrangement according to claim 3 or 4, **characterized in that** at least the free legs (7) of the profiled piece (4; 4") positioned on the inside of the protective tube (1) have a curvature with a radius of curvature which is approximately identical with the radius of curvature of the inside of the protective tube (1).

6. The arrangement according to claim 1, **characterized in that** the closing element is formed by a closing protective tube (34) which has a slit in longitudinal direction.

7. The arrangement according to any one of claims 1 to 6, **characterized in that** the auxiliary tool (8; 8'; 8") comprises two partial bodies (9) which at their one longitudinal side are connected and between which a cavity or space (24) is formed for guiding cables, wires, or the like, and comprises guide members (13) on the outer surfaces of the partial bodies (9), with which the protective tube (1) supplied to the auxiliary tool (8; 8'; 8") can be pushed and/or pulled through, guided along its longitudinal edges (3).

8. The arrangement according to claim 7, **characterized in that** the two partial bodies (9) are connected with a hinge member (11), and that the partial bodies (9) can be opened and closed again along the hinge member (11).

9. The arrangement according to claim 7 or 8, **characterized in that** the guide members (13) and/or guide elements are formed by webs (14; 17, 18).

10. The arrangement according to claim 9, **characterized in that** at least two webs (14) of each guide member (13) are each arranged such that a U-shaped trough (15) is formed, in which the respective longitudinal edge (3) of the protective tube (1) is guided.

11. The arrangement according to any one of claims 7 to 10, **characterized in that** the guide members (13; 14, 15) extend from the one end up to the other end of the partial bodies (9).

12. The arrangement according to any one of claims 7 to 11, **characterized in that** the guide elements (17, 18) are configured in the region of the cavity (24) for guiding a closing element (4; 4'; 4") (welting) to be inserted between the longitudinal edges (3) of the protective tube (1).

13. The arrangement according to claim 12, **characterized in that** a respective web (17) arranged on the inside of each partial body (9) is of such a height that the free edges of the opposite webs (17) abut on each other.

14. The arrangement according to any one of claims 1 to 13, **characterized in that** for the supply of a longitudinally slit protective tube (1), an unslit protective tube (1') is used, which at the input side of the auxiliary tool (8; 8'; 8") is slit by a slitting device (47) in longitudinal direction.

15. The arrangement according to claim 14, **characterized in that** the slitting device is formed by a stationary knife (47).

## Revendications

1. Agencement pour confectionner des gaines de protection (1) avec des câbles, conduites (57), et éléments similaires, logés à l'intérieur, comprenant une réserve (56) d'une gaine de protection (1), qui est fendue dans la direction longitudinale, une réserve (58) d'au moins un câble et/ou d'au moins une conduite (57) ou d'éléments similaires, et un outil auxiliaire (8; 8'; 8") qui est monté en position fixe sur une plateforme de travail (51), agencement dans lequel sur la plateforme de travail (51) sont agencés des éléments de guidage (54) pour amener la gaine de protection (1) jusqu'à l'outil auxiliaire (8; 8'; 8") et l'en évacuer du côté de la sortie, dans lequel les réserves (56; 58) de la gaine de protection (1) et d'au moins soit dudit au moins un câble et/ou de ladite au moins une conduite (57), soit d'éléments similaires, sont maintenues du côté de l'entrée de l'outil auxiliaire (8; 8'; 8"), pour les amener à l'outil auxiliaire (8; 8'; 8"), dans lequel l'outil auxiliaire (8; 8'; 8") est conçu pour permettre, si cela est nécessaire, de réaliser une expansion de la gaine de protection (1), et pour introduire ledit au moins un câble et/ou ladite au moins une conduite (57) dans la gaine de protection (1), et dans lequel la gaine de protection (1), le ou les câble(s) et/ou la ou les conduites (57) sont amenés à la plateforme de travail (51) et évacués de la plateforme de travail (51) avec une vitesse sensiblement identique,
**caractérisé**
**en ce qu'**il est en outre prévu une réserve (59) d'un élément de fermeture (4 ; 4'; 4"; 34) à l'aide duquel peut être fermée la fente (2) de la gaine de protection (1), l'élément de fermeture (4; 4'; 4"; 34) étant amené à la gaine de protection (1), sensiblement à la même vitesse que la gaine de protection (1), derrière la zone d'introduction dudit au moins un câble et/ou de ladite au moins une conduite (57), en produisant ainsi la fermeture de la fente (2) de la gaine de protection (1), et en ce que du côté sortie de l'outil auxiliaire (8; 8'; 8"), est agencée une unité de réception (60) destinée à recevoir la gaine de protection (1) ainsi confectionnée avec les câbles, conduites (57) et éléments similaires, logés à l'intérieur.

2. Agencement selon la revendication 1, **caractérisé en ce que** les réserves (56, 58, 59) de la gaine de protection (1), des câbles et/ou conduites (57), et de l'élément de fermeture (4; 4'; 4"; 34), sont reçues sur des rouleaux de réserve (56, 58, 59).

3. Agencement selon l'une des revendications 1 ou 2, **caractérisé en ce que** l'on met en oeuvre un élément de fermeture (4; 4'; 4"), qui est réalisé sous la forme d'un profilé particulier (4; 4'; 4"), et qui maintient les bords longitudinaux (3) de la gaine de protection (1) le long de la fente (2) de façon à ce qu'ils soient orientés mutuellement dans un même plan, ceci grâce au fait que l'élément de fermeture est inséré par l'outil auxiliaire (8; 8'; 8") entre les bords longitudinaux (3) de la gaine de protection (1).

4. Agencement selon la revendication 3, **caractérisé en ce que** l'élément de fermeture (4; 4") est réalisé, vu en section transversale, sous la forme d'un "U" double ou d'un "T" double, de manière à ce qu'une âme centrale (5) de ce profilé (4; 4") s'insère entre les bords longitudinaux (3) et que le côté supérieur de la gaine (1) soit recouvert le long des bords longitudinaux (3) par des éléments de surface (6) appropriés du profilé (4; 4"), et que le côté intérieur de la gaine (1) soit soutenu le long des bords longitudinaux (3) par des éléments de surface (7) appropriés du profilé (4; 4").

5. Agencement selon la revendication 3 ou la revendication 4, **caractérisé en ce qu'**au moins les ailes libres (7) du profilé (4; 4"), appliquées contre le côté intérieur de la gaine de protection (1), présentent une courbure d'un rayon de courbure correspondant environ au rayon de courbure du côté intérieur de la gaine de protection (1).

6. Agencement selon la revendication 1, **caractérisé en ce que** l'élément de fermeture est formé par une gaine de protection de fermeture (34), qui présente une fente dans la direction longitudinale.

7. Agencement selon l'une des revendications 1 à 6, **caractérisé en ce que** l'outil auxiliaire (8; 8'; 8") présente deux corps partiels (9), qui sont reliés au niveau d'un de leurs côtés longitudinaux, et entre lesquels est formé un espace creux ou un espace intermédiaire (24) destiné à guider des câbles, conduites ou éléments similaires, et présente sur les surfaces extérieures des corps partiels (9), des parties de guidage (13) le long desquelles la gaine de protection (1) amenée à l'outil auxiliaire (8; 8'; 8"), peut être guidée, poussée à travers et/ou tirée à travers le long de ses bords longitudinaux (3).

8. Agencement selon la revendication 7, **caractérisé en ce que** les deux corps partiels (9) sont reliés par une partie de charnière (11), et **en ce que** les corps partiels (9) peuvent être ouverts et à nouveau refermés le long de la partie de charnière (11).

9. Agencement selon la revendication 7 ou la revendication 8, **caractérisé en ce que** les parties de guidage (13) et/ou les éléments de guidage sont formés par des nervures (14; 17, 18).

10. Agencement selon la revendication 9, **caractérisé en ce qu'**au moins deux nervures (14) de chaque partie de guidage (13) sont agencées de manière telle, que soit formée une goulotte (15) dans laquelle est guidé le bord longitudinal (3) respectif de la gaine de protection (1).

11. Agencement selon l'une des revendications 7 à 10, **caractérisé en ce que** les parties de guidage (13; 14, 15) s'étendent d'une extrémité à l'autre extrémité des corps partiels (9).

12. Agencement selon l'une des revendications 7 à 11, **caractérisé en ce que** les éléments de guidage (17, 18) dans la zone de l'espace creux (24) sont réalisés pour guider un élément de fermeture (4; 4'; 4") (bourrelet) à insérer entre les bords longitudinaux (3) de la gaine de protection (1).

13. Agencement selon la revendication 12, **caractérisé en ce qu'**une nervure (17) respective agencée sur le côté intérieur de chaque corps partiel (9), présente une hauteur telle, que les bords libres des nervures (17) opposées viennent s'appliquer l'un contre l'autre.

14. Agencement selon l'une des revendications 1 à 13, **caractérisé en ce que** pour l'amenée d'une gaine de protection (1) fendue en direction longitudinale, on met en oeuvre une gaine de protection non fendue (1'), que l'on fend dans la direction longitudinale du côté entrée de l'outil auxiliaire (8; 8'; 8"), par un dispositif de fendage (47).

15. Agencement selon la revendication 14, **caractérisé en ce que** le dispositif de fendage est formé par un couteau (47) en position fixe.
